# EUROPEAN PATENT APPLICATION

(11) **EP 2 230 404 A1**
(43) Date of publication of application: **22.09.2010**
(21) Application number: 08851535.8
(22) Date of filing: 14.11.2008
(51) Int. Cl.: F04B 39/00, F04C 29/00, H02K 5/22, H02K 7/14

(54) **TERMINAL DEVICE FOR ELECTRIC COMPRESSOR**

(30) Priority: 19.11.2007 JP 2007298969
(71) Applicant: Sanden Corporation, Isesaki-shi, Gunma 372-8502 (JP)
(72) Inventor: TAGUCHI, Masanori, Isesaki-shi Gunma 372-8502 (JP); OSAKA, Masahiko, Isesaki-shi Gunma 372-8502 (JP); KOYAMA, Shigeyuki, Isesaki-shi Gunma 372-8502 (JP); KOBAYASHI, Eiji, Isesaki-shi Gunma 372-8502 (JP)
(74) Representative: Grünecker, Kinkeldey, Stockmair & Schwanhäusser Anwaltssozietät
(86) International application number: PCT/JP2008/070778
(87) International publication number: WO 2009/066618

(57) **Abstract**

A terminal device for an electric compressor has a partition wall and a terminal member for supplying electricity to an electric motor for driving a compression mechanism. The partition wall is located between an electric motor-storing section, which stores the electric motor and in which lubricating oil-containing fluid to be compressed is present, and a circuit section for supplying electricity to the electric motor. The terminal member extends through the partition wall in a sealed and insulated manner. An electricity conduction wire at an end of a lead wire for supplying electricity to the electric motor is directly connected to the end of the terminal member which is on the electric motor-storing section side. An insulation cover is provided so as to extend from the electric motor-storing section-side end of the terminal member to an insulation cover tube of the electricity conduction wire of the lead wire for supplying electricity to the electric motor. The terminal device can exhibit high insulation performance even if polyalkylene glycol-based oil is used as lubricating oil-containing fluid to be compressed. Further, the terminal device has a simple structure not requiring a cluster, can ensure high insulation performance, and can be constructed at low cost.

## Description

### Technical Field of the Invention

The present invention relates to a terminal device for an electric compressor, and specifically, to a terminal device for an electric compressor which can change a kind of lubricating oil contained in fluid to be compressed (for example, refrigerant) to a cheap one, and even when the lubricating oil is changed, can ensure good insulation performance.

### Background Art of the Invention

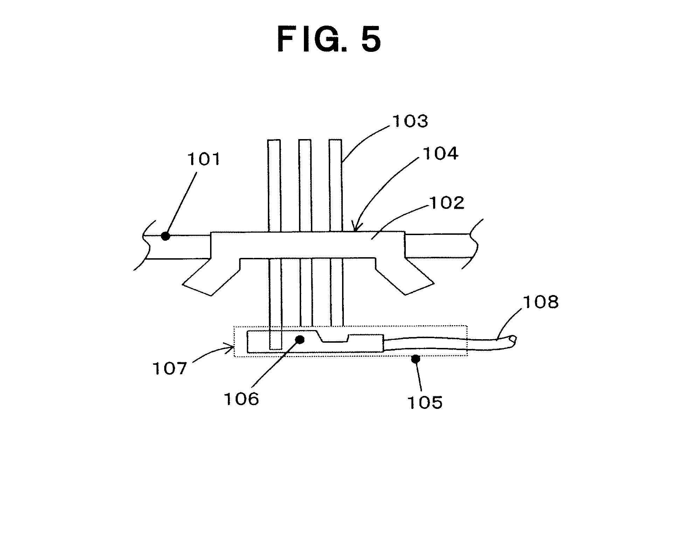

A structure has been known wherein electricity supply to an electric motor built in an electric compressor is carried out using a sealed terminal device (also called as a hermetic terminal) (for example, Patent document I). In such a conventional terminal device for an electric compressor, for example, as depicted in Fig. 5, sealed and insulated terminal device 104, in which a plurality of terminals 103 are held by terminal plate 102 so as to extend through the plate 102 at a sealed and insulated condition (for example, a sealed and insulated condition via glass), is attached at a predetermined position of compressor housing 101, to the inner end of each sealed terminal 103 of this sealed and insulated terminal device 104, each input female terminal 106 of cluster 107, in which a plurality of input female terminals 106 are held in resin housing 105, is electrically connected by fitting, etc., and electricity is supplied to a coil wire for a stator of the built-in electric motor through wire for electricity supply 108 connected to the input female terminal 106.

Further, generally lubricating oil is contained in a fluid to be compressed by a compressor (for example, refrigerant R134a) for lubrication of respective parts of the compressor, etc., and in an electric compressor built in with an electric motor, because the lubricating oil-containing fluid to be compressed exists in (passes through) the electric motor storing section for cooling the built-in electric motor, etc. and it comes into contact with the electric motor storing section side of the terminal device, a high insulation property is required for this portion. In particular, in the above-described structure in which cluster 107 is connected to the inner end of sealed terminal 103, because of presence of the connection structure for the electricity conductive portions by fitting, etc., many gap portions are formed, therein the lubricating oil-containing fluid to be compressed flows and the insulation property is liable to be reduced, and therefore, in order to prevent leak and the like through the lubricating oil, a high insulation property is required. In the conventional electric compressor as described above, usually, polyol ester-based oil, which is used generally for electric household appliances and the like, is used as the lubricating oil, and because this polyol ester-based oil has a relatively high insulation property as oil itself, no problem with respect to failure in insulation occurs.
Patent document 1: JP-A-2006-42409

### Disclosure of the Invention

### Problems to be solved by the Invention

However, because the above-described polyol ester-based oil is expensive, there is a requirement to want to change the lubricating oil to a cheaper one, in particular, to polyalkylene glycol-based oil. However, because the polyalkylene glycol-based oil is low in insulation performance as compared with the polyol ester-based oil, if the kind of the lubricating oil is changed as the conventional cluster terminal structure as shown in Fig. 5 is left as it is, anxiety with respect to insulation performance may remain.

Accordingly, an object of the present invention is to provide a terminal device for an electric compressor which can exhibit a sufficiently high insulation performance even in case where polyalkylene glycol-based oil is used as lubricating oil contained in fluid to be compressed, which can easily employ a simple structure using no cluster, and which can be constructed inexpensively while its high insulation performance can be ensured.

### Means for solving the Problems

To achieve the above-described object, a terminal device for an electric compressor according to the present invention has a partition wall which is located between a storing section for an electric motor for driving a compression mechanism, in which lubricating oil-containing fluid to be compressed is present, and a circuit section for supplying electricity to the electric motor, for isolating the both sections from each other, and a terminal member for supplying electricity to the electric motor which extends through the partition wall in a sealed and insulated manner, and is **characterized in that** an electricity conduction wire at an end of a lead wire for supplying electricity to the electric motor is directly connected to an end of the terminal member which is on an electric motor-storing section side, and an insulation cover is provided so as to extend from the electric motor-storing section-side end of the terminal member to an insulation cover tube of the electricity conduction wire of the lead wire for supplying electricity to the electric motor.

In such a terminal device for an electric compressor, since the electricity conduction wire at the end of the lead wire for supplying electricity to the electric motor (a core wire of the lead wire for electricity supply) is directly connected to the inner end of the terminal member without using a cluster structure, occurrence of unnecessary gap portions and the like, into which lubricating oil-containing fluid to be compressed is liable to enter, is suppressed at this portion, and this portion is constructed in a very simple structure. By making a cluster unnecessary, it becomes to realize a great reduction in cost and simplification of structure for the terminal device. Further, because of direct connection, a good electric conductivity can be ensured. On the other hand, because naked portions for electricity conduction are directly connected to each other, the connection portion is likely to be exposed to the lubricating oil-containing fluid to be compressed, and by this, anxiety with respect to insulation performance in the connection portion, especially, with respect to insulation performance in case where lubricating oil low in insulation property is used, may remain. In order to solve this anxiety, the insulation cover extending from the electric motor-storing section-side end of the terminal member to the insulation cover tube of the electricity conduction wire of the lead wire for electricity supply is provided. By providing this insulation cover, the whole of the above-described connection portion, which has anxiety that the portion may be exposed to the lubricating oil-containing fluid to be compressed, is covered, and therefore, a high insulation performance may be ensured for this portion.

In particular, in case where the above-described insulation cover is an insulation cover capable of coming into close contact with both of the electric motor-storing section-side end of the terminal member and the insulation cover tube, complete isolation of the above-described connection portion becomes possible, and a further high insulation performance may be ensured. As the insulation cover, in consideration of handling ability for attachment and close contact ability with the electric motor-storing section-side end and the insulation cover tube, a material having an elasticity is preferably employed, and for example, it is preferred that the insulation cover is formed from a rubber-based material.

Concrete shape and the like of the above-described terminal member are not particularly limited, and to aim at simplification of structure and reduction in cost, for example, it is possible to employ a structure wherein the terminal member comprises a bolt-like member capable of being fixed at the electricity-supply circuit section side.

Further, in the terminal device for an electric compressor according to the present invention, a structure is preferably employed wherein an electricity conductive portion of the terminal member extending between the above-described both sections is covered with an insulating varnish, and by this, the insulation property of this portion may be also greatly improved by the simple structure where the predetermined electricity conductive portion of the terminal member is merely covered with the insulating varnish. As a result, by together employing the above-described structure provided with the insulation cover, even in case where polyalkylele glycol-based oil low in insulation performance is used as the lubricating oil contained in the fluid to be compressed, it becomes possible to exhibit a necessary and sufficiently high insulation performance more securely.

As the above-described insulating varnish, for example, an electro-deposition varnish can be used. By using an electro-deposition varnish, a layer for insulation may be easily formed at a uniform membrane thickness, and a desired insulation property can be easily obtained over a desirable range.

As the above-described lubricating oil contained in the fluid to be compressed, for example, it is preferred to use a cheap polyalkylene glycol-based oil such as one aforementioned. Although the insulation property of polyalkylene glycol-based oil itself is lower than that of polyol ester-based oil, by the structure of direct connection of the terminal member to the lead wire for electricity supply and the covering structure for the connection portion by the insulation cover in the present invention, and further by the above-described covering structure with the insulating varnish, it becomes possible to realize a sufficiently high insulation performance easily.

In the terminal device for an electric compressor according to the present invention, the above-described partition wall is formed, for example, by a compressor housing. Further, it is also possible that the compressor housing is formed in an open-type structure, the opening portion of the compressor housing is tightly closed by a lid member, for example, by a lid member also functioning as a support member for the electricity supply circuit section, and a function of the above-described partition wall may be given to this lid member.

Further, although the terminal device for an electric compressor according to the present invention can be applied to any electric compressor requiring improvement of insulation performance and simplification of the structure for the terminal device portion, in particular, it is suitable for a compressor used in an air conditioning system for vehicles which is manufactured at a mass production style and which is required to be reduced in cost as a whole and for which reduction in cost of used lubricating oil is strongly required.

Where, the electric compressor in the present invention includes a so-called hybrid compressor which has a first compression mechanism driven only by an external drive source (for example, an engine for a vehicle or an electric motor for vehicle running) and a second compression mechanism driven only by a built-in electric motor in a single compressor and in which the first compression mechanism and the second compression mechanism are driven selectively or simultaneously, in addition to an electric compressor incorporating therein only an electric motor as a drive source for a compression mechanism. In case of the hybrid compressor, the present invention can be applied to a terminal device for the built-in electric motor.

### Effect according to the Invention

In the terminal device for an electric compressor according to the present invention, since the end of the lead wire for electricity supply to the electric motor is directly connected to the inner end of the terminal member, it is not necessary to use a cluster structure using a conventional terminal member made of copper, it becomes possible to greatly reduce cost of the terminal device by greatly simplifying the structure of this portion, and because the whole of the above-described connection portion is covered with the insulation cover, a sufficiently high performance can be ensured for the connection portion in which the electricity conduction portion is liable to be exposed, and therefore, while simplification in structure and reduction in cost are achieved, a necessary and sufficiently high insulation performance can be maintained even in case where polyalkylene glycol-based oil low in insulation performance is used as the lubricating oil contained in the fluid to be compressed.

### Brief explanation of the drawings

[Fig. 1] Fig. 1 is vertical sectional view showing an example of an electric compressor applied with a terminal device for an electric compressor according to the present invention.
[Fig. 2] Fig. 2 is a schematic sectional view of a connection portion of a terminal member used in the terminal device for an electric compressor depicted in Fig. 1 with a lead wire for electricity supply.
[Fig. 3] Fig. 3 is a schematic sectional view of a connection portion of a terminal member with a lead wire for electricity supply, showing another example different from that depicted in Fig. 2.
[Fig. 4] Fig. 4 is a schematic side view of a terminal member showing an example being provided with an insulating varnish.
[Fig. 5] Fig. 5 is a schematic diagram of a conventional terminal device.

### Explanation of symbols

- 1:: electric compressor
- 2:: fixed scroll
- 3:: movable scroll
- 4:: compression mechanism
- 8:: compressor housing
- 9:: electric motor
- 10:: rotational shaft
- 11:: stator
- 12:: rotor
- 13:: electric motor storing section
- 14:: side wall of compressor housing as partition wall
- 15:: terminal device
- 16:: circuit section for electricity supply
- 17:: terminal member for electricity supply
- 18:: lead wire for electricity supply
- 19:: insulation cover tube
- 20:: coil wire for stator
- 21:: caulked portion
- 22:: additional insulation cover tube
- 23, 24:: insulation cover
- 25:: insulating varnish

### The Best mode for carrying out the Invention

Hereinafter, desirable embodiments of the present invention will be explained referring to the drawings.

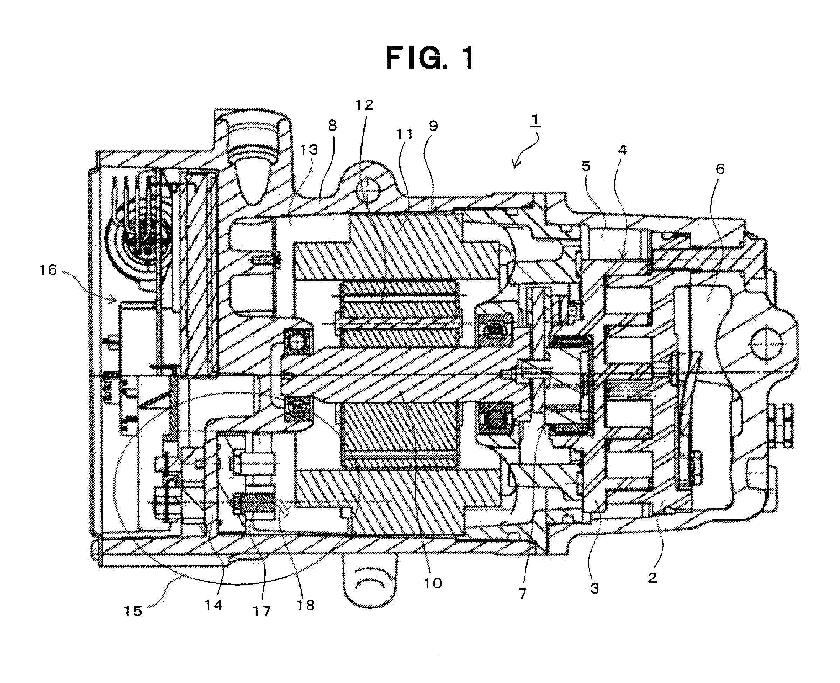

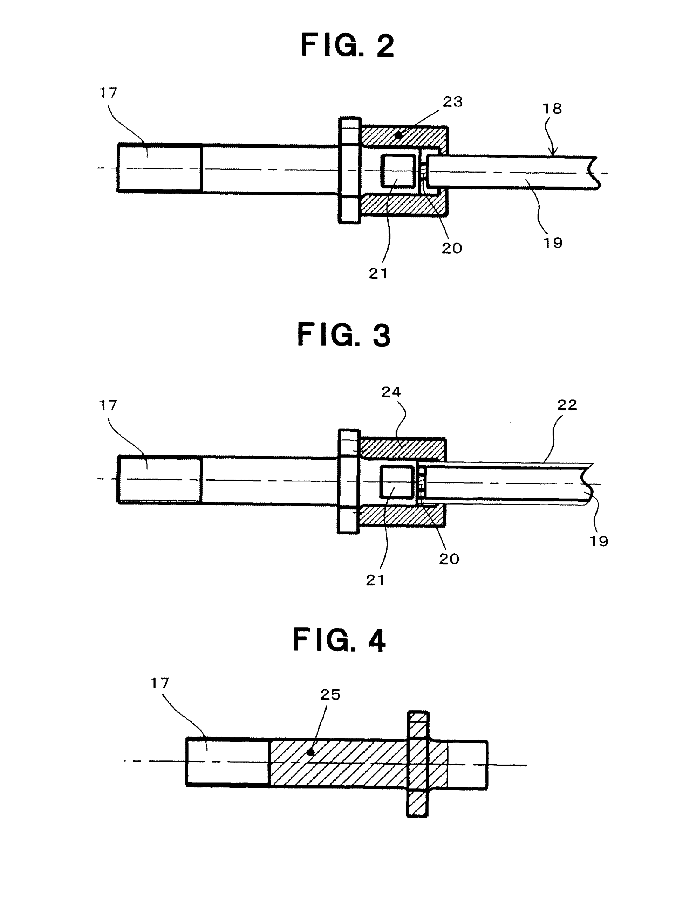

Fig. 1 depicts an example of an electric compressor applied with the present invention, Figs. 2-4 show examples of the portions of terminal members of a terminal device in case where the present invention is applied to the electric compressor. In Fig. 1, symbol 1 indicates the whole of the electric compressor, electric compressor 1 has a scroll type compression mechanism 4 comprising a fixed scroll 2 and a movable scroll 3, and a fluid to be compressed (for example, refrigerant R134a) sucked from a suction chamber 5 is compressed in compression mechanism 4, and thereafter, it is discharged into a discharge chamber 6. Movable scroll 3 is driven by a rotational shaft 10 of an electric motor 9 built in a compressor housing 8 so as to achieve an orbital movement relative to fixed scroll 2 via a crank mechanism 7. Electric motor 9 comprises a stator 11 and rotor 12, and rotational shaft 10 is rotated integrally with rotor 12. The fluid to be compressed contains lubricating oil which is polyalkylene glycol-based oil, and this lubricating oil-containing fluid to be compressed is passed also through a storing section 13 for the built-in electric motor 9.

A terminal device 15 is provided on a side wall 14 of compressor housing 8, and a predetermined electricity is supplied to electric motor 9 through terminal device 15 from a circuit section for electricity supply 16 connected to an external power source (not shown). This electricity supply is performed through a terminal member for electricity supply 17 to electric motor 9, which extends through a partition wall (in this embodiment, side wall 14 of compressor housing 8) that is located between storing section 13 for electric motor 9 for driving the compression mechanism present with the lubricating oil-containing fluid to be compressed and circuit section for electricity supply 16 to electric motor 9 and that isolates the both sections, and a lead wire for electricity supply 18 for electric motor 9 connected to the inner end of terminal member 17 (the electric motor storing section-side end). The core wire of lead wire for power supply 18 extends toward stator 11 so as to form the coil of stator 11 of motor 9.

The portion of the above-described terminal member 17 is structured as depicted in Figs. 2-4. In the example depicted in Fig. 2, the above-described terminal member 17 is formed as a bolt-like member capable of being fixed at the side of electricity supply circuit section 16. To the inner end of this terminal member 17 (the electric motor storing section-side end), the end of lead wire for electricity supply 18, in particular, the end of coil wire 20 for stator 11 of electric motor 9, which is the core wire (electricity conduction wire) of lead wire for electricity supply 18 covered with insulation cover tube 19, is connected, for example, by caulking at a caulked portion 21. In the example depicted in Fig. 3, an additional insulation cover tube 22 is further covered on the above-described insulation cover tube 19 in order to further enhance the insulation property, and similarly to the above-described structure, the end of coil wire 20 of stator 11 is connected at caulked portion 21 by caulking.

Such an electric connection portion formed by caulked portion 21 is covered with insulation covers 23, 24 as depicted in Figs. 2 and 3. Insulation covers 23, 24 are formed from a rubber-based material, and they are provided so as to extend from the electric motor storing section-side end of terminal member 17 to insulation cover tubes 19, 22 for the electricity conduction wire of lead wire for electricity supply 18 and so as to come into close contact with both sides. By the structure where insulation covers 23, 24 are brought into close contact with both of the electric motor storing section-side end of terminal member 17 and insulation cover tubes 19, 22, the above-described electric connection portion is completely covered, and the connection portion is securely insulated from the lubricating oil contained in the fluid to be compressed which is present in the electric motor storing section side.

Further, in this embodiment, as depicted in Fig. 4, the electricity conduction portion of terminal member 17 extending between the both sections of electric motor storing section 13 and circuit section for electricity supply 16 is covered with insulating varnish 25 comprising an electro-deposition varnish, and the outer surface of terminal member 17 in this zone is completely insulated from the circumferences. Therefore, particularly, in the inner end-side portion of and its vicinity of terminal member 17 can be maintained at a necessary and sufficiently high insulation performance, by this structure together with the above-described insulation structure due to insulation covers 23, 24, even if polyalkylene glycol-based oil low in insulation performance is used as the lubricating oil contained in the fluid to be compressed.

Further, by the structure where the end of lead wire for electricity supply 18 to electric motor 9 is directly connected to the inner end of terminal member 17, it becomes unnecessary to use a cluster structure, and simplification of the structure of this portion and reduction in cost of the terminal device also become possible at the same time. Namely, in addition to realization of a desired high insulation performance, simplification of the structure and reduction in cost of the terminal device are achieved.

### Industrial Applications of the Invention

The terminal device for an electric compressor according to the present invention can be applied to any electric compressor incorporating therein an electric motor, and in particular, it is suitable for a compressor used in an air conditioning system for vehicles which is manufactured at a mass production style and which is required to be reduced in cost as the whole of the compressor and for which reduction in cost of used lubricant is required.

## Claims

1. A terminal device for an electric compressor having a partition wall which is located between a storing section for an electric motor for driving a compression mechanism, in which lubricating oil-containing fluid to be compressed is present, and a circuit section for supplying electricity to said electric motor, for isolating said both sections from each other, and a terminal member for supplying electricity to said electric motor which extends through said partition wall in a sealed and insulated manner, **characterized in that** an electricity conduction wire at an end of a lead wire for supplying electricity to said electric motor is directly connected to an end of said terminal member which is on an electric motor-storing section side, and an insulation cover is provided so as to extend from said electric motor-storing section-side end of said terminal member to an insulation cover tube of said electricity conduction wire of said lead wire for supplying electricity to said electric motor.

2. The terminal device for an electric compressor according to claim 1, wherein said insulation cover is an insulation cover capable of coming into close contact with both of said electric motor-storing section-side end of said terminal member and said insulation cover tube.

3. The terminal device for an electric compressor according to claim 1, wherein said insulation cover is formed from a rubber-based material.

4. The terminal device for an electric compressor according to claim 1, wherein said terminal member comprises a bolt-like member capable of being fixed at a side of said electricity-supply circuit section.

5. The terminal device for an electric compressor according to claim 1, wherein an electricity conductive portion of said terminal member extending between said both sections is covered with an insulating varnish.

6. The terminal device for an electric compressor according to claim 5, wherein said insulating varnish is an electro-deposition varnish.

7. The terminal device for an electric compressor according to claim 1, wherein a polyalkylene glycol-based oil is used as said lubricating oil.

8. The terminal device for an electric compressor according to claim 1, wherein said partition wall is formed by a compressor housing.

9. The terminal device for an electric compressor according to claim 1, wherein said electric compressor is a compressor used in an air conditioning system for vehicles.
